(19) **Europäisches Patentamt**

**European Patent Office**

**Office européen des brevets**

(11) **EP 0 889 463 B1**

(12) **EUROPEAN PATENT SPECIFICATION**

(45) Date of publication and mention
of the grant of the patent:
**24.09.2003 Bulletin 2003/39**

(51) Int Cl.⁷: $G11B\ 5/53$, G11B 15/61,
G11B 5/008
// G11B31/00

(21) Application number: **98305069.1**

(22) Date of filing: **26.06.1998**

(54) **Structure of rotary head for use in video recorder**

Rotierende Kopfstruktur zum Gebrauch in Videorekorder

Tête rotative pour utilisation en enregistreur vidéo

(84) Designated Contracting States:
**DE FR GB**

(30) Priority: **30.06.1997 JP 18921697**

(43) Date of publication of application:
**07.01.1999 Bulletin 1999/01**

(73) Proprietor: **Victor Company of Japan, Ltd.**
**Yokohama 221-0022 (JP)**

(72) Inventor: **Wakui, Yoshiaki**
**Yokohama (JP)**

(74) Representative: **Senior, Alan Murray et al**
**J.A. KEMP & CO.,**
**14 South Square,**
**Gray's Inn**
**London WC1R 5JJ (GB)**

(56) References cited:
**EP-A- 0 499 464        EP-A- 0 714 095**
**US-A- 4 236 185        US-A- 4 591 924**
**US-A- 4 758 911**

EP 0 889 463 B1

## Description

The present invention relates generally to an improved stucture of a preferably small-sized, rotary head for use in digital video recorders.

In recent years, digital video tape recorders (VTRs) are being developed remarkably. This type of VTRs have a plurality of magnetic heads mounted on an outer peripheral surface of a rotary drum and supply digital signals to the magnetic heads to record slant tracks on a magnetic tape which is wrapped about the rotary drum through 180° and which is traveling at constant speed and to reproduce the digital signals recorded on the slant tracks.

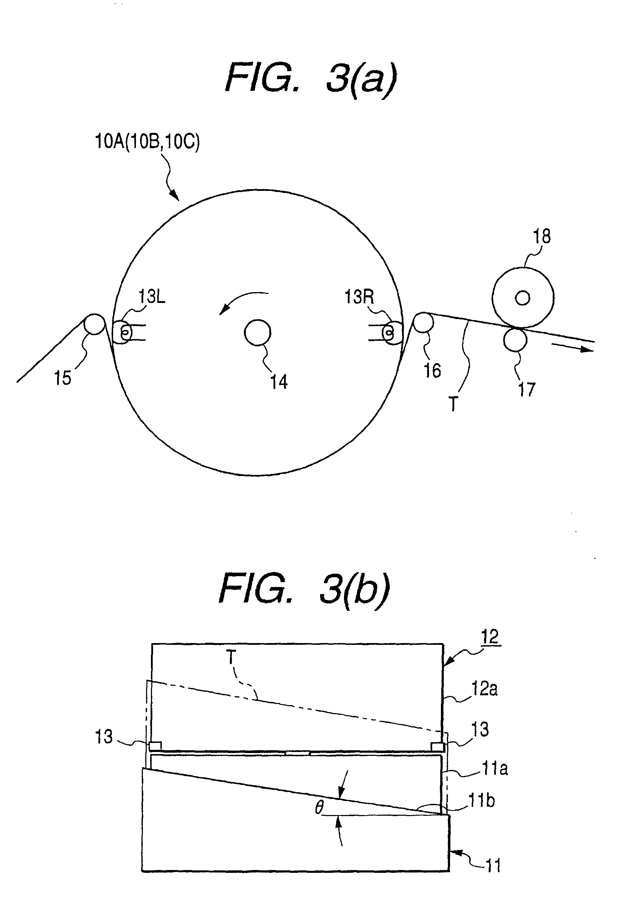

Figs. 3(a) and 3(b) show a conventional rotary head assembly for use in digital VTRs.

The rotary head assembly 10A is mounted on a chassis (not shown) and consists of a stationary drum 11 and a rotary drum 12 both having a standardized diameter of 21.7 mm, for example. The stationary drum 11 has a lead 11b formed thereon at a given lead. angle θ of 9.150° for wrapping a magnetic tape T around an outer peripheral tape guide surface 11a helically through close to 180°. The rotary drum 12 is disposed on the stationary drum 11 so as to be rotatable about an axis 14 in a direction indicated by an arrow in Fig. 3(a) at approximately 9000 rpm. The rotary drum 12 has mounted therein a pair of magnetic heads 13 (13R, 13L) which partially project from an outer peripheral tape guide surface 12a. The magnetic heads 13R and 13L are located at an angular interval of 180° away from each other and used to record and reproduce digital signals at R and L channels, or ch-1 and ch-2, respectively.

Disposed on right and left sides of the rotary head assembly 10A are entrance and exit guide poles 15 and 16 which are inclined to achieve a 180° helical wrap of the magnetic tape T being withdrawn from a tape cassette (not shown).

A capstan 17 and a pinch roller 18 are installed downstream of the exit guide pole 16. The capstan 17 is rotated by a capstan motor (not shown) and forms a nip between itself and the pinch roller 18 through which the magnetic tape T travels at an SP (Standard Play) mode speed or an LP (Long Play) mode speed.

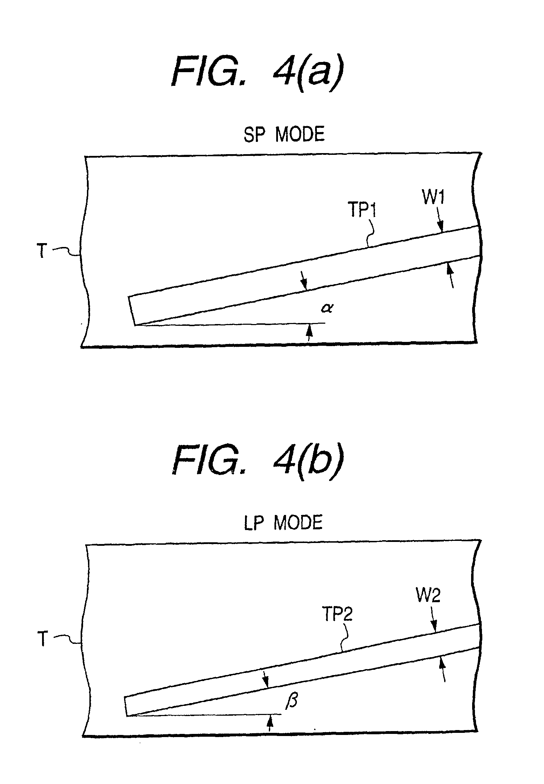

In operation, compressed signals are inputted to the magnetic heads 13R and 13L to form a first slant track TP1 shown in Fig. 4(a) or a second slant track TP2 shown in Fig. 4(b) on the magnetic tape T. The first slant track TP1 is oriented at a first track angle α (= 9.1668°) to a reference edge, while the second slant track TP2 is oriented at a second track angle β (=9.1612°) to the reference edge.

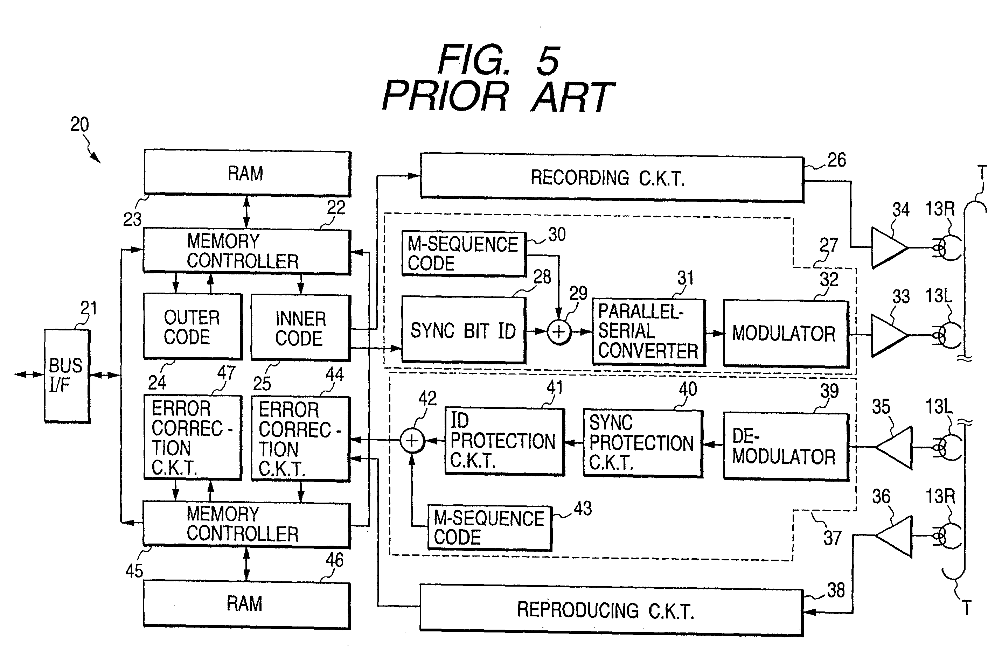

The first and second track angles α and β are standardized and depend upon the lead angle θ of the lead 11b formed on the stationary drum 11, the rotational speed of the rotary drum 12, and the SP and LP mode speeds of the magnetic tape T. Since the rotational speed of the rotary drum 12 is constant, but the SP and LP mode speeds of the magnetic tape T are different, the first and second track angles α and β are different from each other slightly, and a difference therebetween is determined based on the vector sum of the SP and LP mode speeds. The first and second slant tracks TP1 and TP2 and the first and second track angles α and β are standardized to achieve compatibility of the rotary head assembly 10A between recordings on the magnetic tape T traveling at the SP and LP mode speeds in a conventional VTR 20 shown in Fig. 5 as will be discussed later.

The width W1 of the first slant track TP1 is wider as much as 0.010 mm, while the width W2 of the second slant track TP2 is 0.00667 mm which is narrower than the width W1. The track width ratio (W2:W1) is, thus, 2:3.

Fig. 5 shows the conventional VTR 20 equipped with the rotary head assembly 10A.

In a record mode of operation, digital data (including a header) is supplied to and stored in a RAM 23 through a bus interface (I/F) 21 and a memory controller 22. The digital data is also supplied to an outer code generator 24 wherein an error correction code (i.e., an outer code) for data to be recorded on one track is produced and then returned back to the memory controller 22.

The memory controller 22 provides the input digital data and the outer code to an inner code generator 25 wherein an error correction code (i.e., an inner code) of, for example, 8 bytes is produced in units of one data block (i.e., a sync block). An output signal of the inner code generator 25 is supplied to a recording circuit 26 together with the input digital data and the outer code. Digital data of a subsequent track is inputted to a recording circuit 27 together with the outer and inner codes in the same manner.

The recording circuits 26 and 27 have the same circuit structure, and only the recording circuit 27 will be described below in structure and operation for the brevity of explanation.

The recording circuit 27 includes a sync bit ID generator 28, an adder 29, an M-sequence code generator 30, a parallel-serial converter 31, and a modulator 32.

A digital signal including the input data, the outer code, and the inner code is inputted to the sync bit ID generator 28. The sync bit ID generator 28 adds a synchronization bit and an ID code carrying identification information such as address information to the input digital signal in units of one sync block and outputs it to the adder 29. The adder 29 scrambles the input digital signal by performing an operation of exclusive-ORing between an M-sequence code inputted from the M-sequence code generator 30 and corresponding bits of the input digital signal.

Signals outputted in parallel from the adder 29 are inputted to the parallel-serial converter 31 and converted into serial signals which are, in turn, inputted to the modulator 32. The modulator 32 subjects the input signals to given modulation (NRZI, etc.) and provides them to a record amplifier 33. The record amplifier 33 amplifies the input signals and supplies them to the L channel magnetic head 13L. In the same manner, the recording circuit 26 produces record data signals to the R-channel magnetic head 13R through a record amplifier 34. The magnetic heads 13R and 13L record two slant tracks in parallel on the magnetic tape T.

In a playback mode of operation, the magnetic heads 13L and 13R reproduce the digital signals recorded on the slant tracks of the magnetic tape T and supply them to reproducing circuits 37 and 38 through pre-amplifiers 35 and 36.

The reproducing circuit 37 includes a demodulator 39, a sync protector 40, an ID protector 41, an adder 42, and an M-sequence code generator 43. The reproducing circuit 38 has the same circuit structure, and explanation thereof in detail will be omitted here.

The digital signals reproduced by the magnetic head 13L are inputted to the demodulator 39 through a pre-amplifier 35 and supplied to the adder 42 through the sync protector 40 and the ID protector 41. The adder 42 performs an operation of exclusive-ORing between an M-sequence code inputted from the M-sequence code generator 43 and corresponding bits of the input signal.

The M-sequence code produced by the M-sequence generator 43 is identical with that produced by the M-sequence generator 30. The digital signals inputted to the adder 42 are, thus, descrambled so that they are converted into signals before scrambled. The output signals of the adder 42 are sent to an error correction circuit 44. Similarly, output signals of the reproducing circuit 38 are inputted to the error correction circuit 44.

The error correction circuit 44 subjects the input signals to error correction using an inner code in units of one sync block and stores them in a RAM 46 trough a memory controller 45 temporarily. The memory controller 45 reads the digital signal out of the RAM 46 and supplies it to the error correction circuit 47. The error correction circuit 47 subjects the input signal to error correction using an outer code and outputs it to the bus I/F 21.

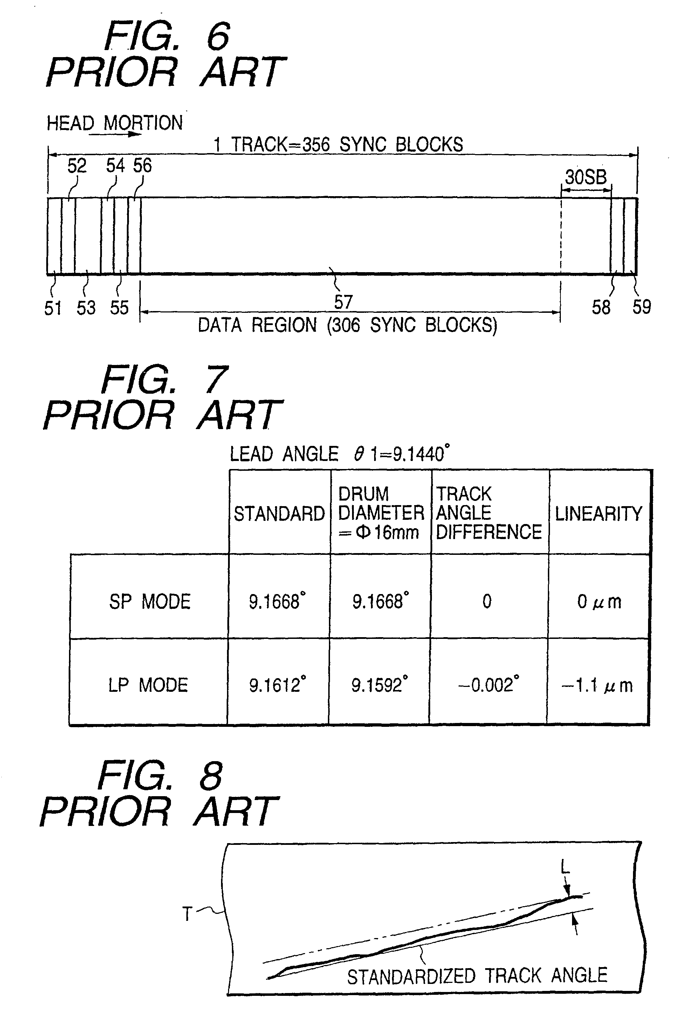

Fig. 6 shows a typical record format of one track formed on the magnetic tape T which includes a margin region 51, a preamble region 52, a subcode region 53, a postamble region 54, an IBG region 55, a preamble region 56, a main data region 57, a postamble region 58, and a margin region 59 and which consists of a total of 356 sync blocks. Each of the margin regions 51 and 59 arranged on both ends of the track occupies two sync blocks.

The main data region 57 consists of a data region and an error correction region which occupy a total of 336 sync blocks. The data region occupies 306 of the 336 sync blocks which is a multiple of 6 sync blocks, while the error correction codes occupies the remaining 30 sync blocks (SB) on which the outer code (C3) produced by the outer code generator 24 in Fig. 5 is to be recorded.

The disadvantage is encountered in mounting the rotary head assembly 10A and the VTR 20 in a typical video camera. Specifically, the standardization of the diameter of each of the stationary drum 11 and the rotary drum 12 limits reduction in size of the VTR 20, thus making it difficult to decrease the overall size of the camera. The VTR 20, however, allows the diameter of each of the stationary drum 11 and the rotary drum 12 to be changed below the standardized value (= 21.7 mm) if digital signals are compressed and expanded in record and playback modes of operation.

Decreasing the diameter of the stationary drum 11 and the rotary drum 12 without changing the rotational speed of the rotary drum 12 (9000 rpm) and the SP and LP mode speeds of the magnetic tape T, however, gives rise to the following problem.

Not changing the rotational speed of the rotary drum 12 (9000 rpm) and the SP and LP mode speeds of the magnetic tape T that are factors in determination of the first and second track angles $\alpha$ and $\beta$ of the first and second slant tracks requires determination of the lead angle $\theta$ taking into account compatibility of the rotary drum assembly 10A between recordings of the first and second slant tracks TP1 and TP2 on the magnetic tape T. The lead angle $\theta$ of the lead 11b formed on the stationary drum 11 cannot, however, be determined to achieve such compatibility in the following reasons.

If the diameter of each of the stationary drum 11 and the rotary 12 is 16 mm, the lead angle $\theta 1$ of the lead 11b of the stationary drum 11 which allows the first slant track TP1 to be formed at the first track angle $\alpha$ (= 9.1668°) during traveling of the magnetic tape T at the SP mode speed is

$$\theta 1 = 9.1440°$$

When digital signals are recorded on the magnetic tape T traveling along the lead 11b inclined at the above lead angle $\theta 1$ (= 9.1440°), the first track angle $\alpha$ of the first slant track TP1 formed during traveling of the magnetic tape T at the SP mode speed meets a standard thereof, however, the second track angle $\beta$ of the second slant track TP2 formed during traveling of the magnetic tape T at the LP mode speed does not meet a standard thereof. Specifically, the second track angle $\beta$ is, as clearly shown in Fig. 7, shifted greatly from the standard, thus resulting in a deterioration in linearity of the second slant track TP2. The deterioration in linearity, as referred to herein, is a shift L between the second slant track TP2 and a reference line along which the second slant track TP2 is formed with the standardized second track angle $\beta$ (= 9.1612°), as shown in Fig. 8. A standard of such a shift between the first slant track TP1 and a reference line along which the first slant track TP1 is formed with the standardized first track angle α when the magnetic tape T travels at the SP mode speed is within 3 µm. Therefore, a shift L of the second slant track TP2 exceeding 1 µm adversely affects a tracking operation of the magnetic head 13.

The same is true for the case where the lead angle θ1 of the lead 11b of the stationary drum 11 is determined which allows the second slant track TP2 to be formed with the second track angle β (= 9.1612°) during traveling of the magnetic tape T at the LP mode speed. Specifically, the first slant track TP1 is shifted from the reference line along which the first slant track is formed with the first track angle α (= 9.1668°) during traveling of the magnetic tape T at the SP mode speed.

It is an aim of the present invention to provide a rotary head assembly for use in digital video recorders which is designed to achieve improved compatibility between recordings on a magnetic tape traveling at the SP and LP mode speeds.

According to one aspect of the present invention, there is provided a rotary head apparatus for use in recording and/or reproducing digital signals on and/or from a magnetic tape which comprises: (a) a stationary drum having a diameter smaller than a standardized drum diameter; (b) a rotary drum disposed coaxially with the stationary drum and rotatably at a standardized speed, the rotary drum having a diameter smaller than the standard drum diameter; (c) magnetic heads installed on the rotary drum to form a first and a second slant track on the magnetic tape traveling at a first speed and a second speed slower than the first speed, respectively, for recording the digital signals on the magnetic tape and/or to reproduce the digital signals recorded on a first and a second slant track formed on the magnetic tape traveling at the first and the second speed, respectively, the first slant track being oriented at a first standardized track angle, the second slant track being oriented at a second standardized track angle; and (d) a lead formed on an outer peripheral surface of the stationary drum at a given lead angle to achieve a helical wrap of the magnetic tape around the stationary drum and the rotary drum, the given lead angle being set to a middle value between a first and a second lead angle, the first lead angle allowing the first slant track to be formed at the first standardized track angle during traveling of the magnetic tape at the first speed, the second lead angle allowing the second slant track to be formed at the second standardized track angle during traveling of the magnetic tape at the second speed.

In the preferred mode of the invention, the given lead angle is determined by correcting the middle value between the first and the second lead angle using a width ratio of the first to the second standardized slant track.

The present invention will be understood more fully from the detailed description given hereinbelow and from the accompanying drawings of the preferred embodiment of the invention, which, however, should not be taken to limit the invention to the specific embodiment but are for explanation and understanding only.

In the drawings:

Fig. 1 is a table listing track angle standards, track angles when the diameter of a rotary drum is 16 mm, track angle differences or errors, and linearity of tracks in terms of SP (Standard Play) and LP (Long Play) modes in the first embodiment of the invention;

Fig. 2 is a table listing track angle standards, track angles when the diameter of a rotary drum is 16 mm, track angle differences or errors, and linearity of tracks in terms of SP (Standard Play) and LP (Long Play) modes in the second embodiment of the invention;

Fig. 3(a) is a top view which shows a rotary head;

Fig. 3(b) is a side view of the rotary head in Fig. 3(a);

Fig. 4(a) is a partial enlarged view which shows a digital signal-recorded slant track formed on a magnetic tape traveling in an SP mode;

Fig. 4(b) is a partial enlarged view which shows a digital signal-recorded slant track formed on a magnetic tape traveling in an LP mode;

Fig. 5 is a block diagram which shows a conventional digital video tape recorder equipped with the rotary head shown in Figs. 3(a) and 3(b);

Fig. 6 is an illustration which shows an example of a record format of one track formed by the digital video tape recorder in Fig. 5;

Fig. 7 is a table listing track angle standards, track angles when the diameter of a rotary drum is 16 mm, track angle differences or errors, and linearity of tracks in terms of SP (Standard Play) and LP (Long Play) modes in a conventional VTR; and

Fig. 8 is an illustration which a shift of a track (i.e., linearity of track) formed on a magnetic tape from a standardized track.

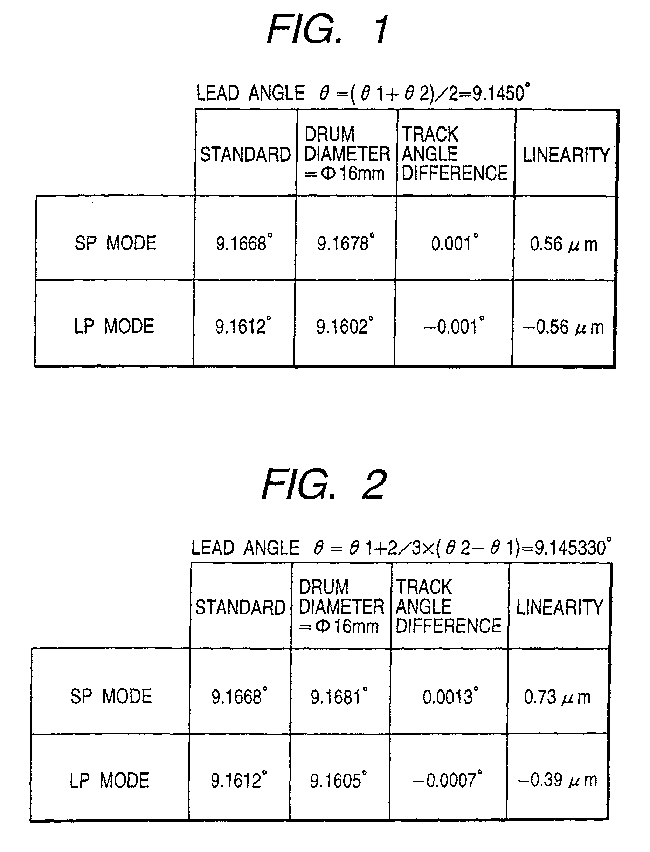

A rotary head assembly 10B according to the first embodiment of the invention will be described below with reference to Fig 1. The rotary head assembly 10B is identical in structure with the rotary head assembly 10A, as shown in Figs. 3(a) and 3(b), expect for the lead angle θ of the lead 11b formed on the stationary drum 11, and explanation of the same parts in detail will be omitted here for the brevity of disclosure.

The rotary head assembly 10B includes the stationary and rotary drums 11 and 12 each having the diameter smaller than the standardized drum diameter of 21.7 mm. The stationary drum 11 has formed thereon the lead 11b inclined at the lead angle θ which achieves the compatibility of the rotary head assembly 10B spinning at 9000 rpm between recordings on a magnetic tape traveling at a first speed (i.e., the standard play (SP) mode speed) and a second speed (i.e., a long play (LP) mode speed). The lead angle θ is determined in the following manner.

Assuming that the diameter of each of the outer tape guide surface 11a of the stationary drum 11 and the outer tape guide surface 12a of the rotary drum 12 is 16 mm, the lead angle $\theta 1$ of the lead 11b of the stationary drum 11 which allows the first slant track TP1 to be formed at the first track angle $\alpha$ (= 9.1668°) during traveling of the magnetic tape at the SP mode speed is

$$\theta 1 = 9.144027°$$

If a lead angle of the lead 11b which allows the second slant track TP2 to be formed at the second track angle $\beta$ (= 9.1612°) during traveling of the magnetic tape at the LP mode speed is defined as $\theta 2$, the lead angle $\theta 2$ is

$$\theta 2 = 9.1459943°$$

Next, the lead angle $\theta$ is set to a middle value between the lead angles $\theta 1$ and $\theta 2$. Specifically, the lead angle $\theta$ is determined according to the relation of

$$\theta = (\theta 1 + \theta 2) / 2 \qquad (1)$$

Substituting $\theta 1 = 9.144027°$ and $\theta 2 = 9.1459943°$ into Eq. (1), we obtain

$$\theta = 9.1450°$$

The determination of the lead angle $\theta$ in the above manner will cause the first and second slant tracks TP1 and TP2 to be formed on the magnetic tape traveling in the SP and LP mode speeds at angles shifted from standardized track angles by 0.001° and -0.001°, however, these errors are within an allowable range of a machining error of the lead 11b and an assembling error of the rotary head assembly 10B and do not compromise the linearity of the first and second slant tracks TP1 and TP2, thus achieving the compatibility of the rotary head assembly 10B spinning at 9000 rpm between recordings on the magnetic tape traveling at the SP and LP mode speeds and also allowing the overall size of a video camera to be reduced for improving the portability.

The rotary head assembly 10B may have a plurality of record/playback magnetic heads mounted on the rotary drum 12 for self-recording and reproducing and alternatively have magnetic heads for playback only.

The rotary drum assembly 10C of the second embodiment will be described below with reference to Fig. 2.

The rotary head assembly 10C is, similar to the first embodiment, identical in structure with the rotary head assembly 10A, as shown in Figs. 3(a) and 3(b), except for the lead angle $\theta$ of the lead 11b formed on the stationary drum 11.

The lead angle $\theta$ of the lead 11b is determined taking the widths W1 and W2 of the first and second slant tracks TP1 and TP2, as shown in Figs. 4(a) and 4(b), into account in addition to the technical concept, as described in the first embodiment, that the lead angle $\theta$ is set to the middle value between the lead angle $\theta 1$ matched with the first track angle $\alpha$ and the lead angle $\theta 2$ matched with the second track angle $\beta$.

The width W1 of the first slant track TP1 is, as already described with reference to Figs. 4(a) and 4(b), 0.010 mm, while the width W2 of the second slant track TP2 is 0.00667 mm which is smaller than the width W1. The track width ratio of W2 to W1 is, thus, 2 : 3 and used as a coefficient in determination of the lead angle $\theta$ as shown below.

$$\theta = \theta 1 + 2/3 \times (\theta 2 - \theta 1) \qquad (2)$$

Substituting $\theta 1 = 9.144027°$ and $\theta 2 = 9.1459943°$ into Eq. (2), we obtain

$$\theta = 9.145330°$$

The above determination of the lead angle $\theta$ decreases, as clearly shown in Fig. 2, a track angle difference between the second slant track TP2 and its standard, thereby facilitating head tracking of the second slant track TP2 which is narrower than the first slant track TP1.

While the present invention has been disclosed in terms of the preferred embodiment in order to facilitate a better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

**Claims**

1. A rotary head apparatus for use in recording and/or reproducing digital signals on and/or from a magnetic tape (T) comprising:

   a stationary drum (11) having a diameter smaller than a standardized drum diameter;
   a rotary drum (12) disposed coaxially with said stationary drum (11) and rotatably at a standardized speed, said rotary drum (12) having a diameter smaller than said standardized drum diameter;

magnetic heads (13) installed on said rotary drum (12) to form a first and a second slant track (TP1, TP2) on the magnetic tape (T) traveling at a first speed and a second speed slower than the first speed, respectively, for recording the digital signals on the magnetic tape (T) and/or to reproduce the digital signals recorded on a first (TP1) and a second slant track (TP2) formed on the magnetic tape (T) traveling at the first and the second speed, respectively, the first slant track (TP1) being oriented at a first standardized track angle ($\alpha$), the second slant track (TP2) being oriented at a second standardized track angle ($\beta$) ; and

a lead (11b) formed on an outer peripheral surface of said stationary drum (11) a given lead angle ($\theta$) to achieve a helical wrap of the magnetic tape (T) around said stationary drum (11) and said rotary drum, said given lead angle ($\theta$) being set to a middle value between a first and a second lead angle, the first lead angle allowing the first slant track to be formed at the first standardized track angle ($\alpha$) during traveling of the magnetic tape at the first speed, the second lead angle allowing the second slant track to be formed at the second standardized track angle ($\beta$) during traveling of the magnetic tape (T) at the second speed.

2. A rotary head apparatus as set forth in claim 1, wherein said given lead angle ($\theta$) is determined by correcting the middle value between the first and the second lead angle using a width (W1, W2) ratio of the first (TP1) to the second standardized slant track (TP2).

**Patentansprüche**

1. Rotationskopfvorrichtung zur Verwendung beim Aufzeichnen von Digitalsignalen auf einem Magnetband (T) und / oder beim Wiedergeben von Digitalsignalen von einem Magnetband (T), mit:

einer stationären Trommel (11) mit einem Durchmesser, der kleiner als ein standardisierter Trommeldurchmesser ist;
einer Rotationstrommel (12), die koaxial mit der stationären Trommel (11) und mit einer standardisierten Drehzahl rotierend angeordnet ist, wobei die Rotationstrommel (12) einen Durchmesser aufweist, der kleiner als der standardisierte Trommeldurchmesser ist; Magnetköpfen (13), die an der Rotationstrommel (12) angebracht sind, um eine erste und eine zweite Schrägspur (TP1, TP2) an dem Magnetband (T) zu bilden, das sich mit einer ersten Geschwindigkeit bzw. einer zweiten Geschwindigkeit, die langsamer als die erste Geschwindigkeit ist, zum Aufzeichnen der Digitalsignale auf das Magnetband (T) und / oder zum Wiedergeben der Digitalsignale bewegt, die an einer ersten (TP1) und einer zweiten Schrägspur (TP2) aufgezeichnet sind, die an dem Magnetband (T) ausgebildet sind, das sich mit der ersten bzw. der zweiten Geschwindigkeit bewegt, wobei die erste Schrägspur (TP1) unter einem ersten standardisierten Schrägwinkel ($\alpha$) orientiert ist und die zweite Schrägspur (TP2) unter einem zweiten standardisierten Schrägwinkel ($\beta$) orientiert ist; und

einer Steigung (11b), die an der äußeren Umfangsfläche der stationären Trommel (11) unter einem gegebenen Steigungswinkel ($\theta$) ausgebildet ist, um eine schraubenförmige Umschlingung des Magnetbandes (T) um die stationäre Trommel (11) und die Rotationstrommel zu erzielen, wobei der gegebene Steigungswinkel ($\theta$) auf einen mittleren Wert zwischen einem ersten und einem zweiten Steigungswinkel eingestellt ist, wobei der erste Steigungswinkel zulässt, dass die erste Schrägspur unter dem ersten standardisierten Spurwinkel ($\alpha$) während der Bewegung des Magnetbandes mit der ersten Geschwindigkeit gebildet wird, und der zweite Steigungswinkel zulässt, dass die zweite Schrägspur unter dem zweiten standardisierten Spurwinkel ($\beta$) während der Bewegung des Magnetbandes (T) mit der zweiten Geschwindigkeit gebildet wird.

2. Rotationskopfvorrichtung nach Anspruch 1, wobei der gegebene Steigungswinkel ($\theta$) durch Korrektur des Mittelwertes zwischen dem ersten und dem zweiten Steigungswinkel unter Verwendung eines Verhältnisses von Breiten (W1, W2) der ersten (TP1) zu der zweiten standardisierten Schrägspur (TP2) bestimmt wird.

**Revendications**

1. Appareil à têtes rotatives pour utilisation dans l'enregistrement et/ou la reproduction de signaux numériques sur et/ou à partir d'une bande magnétique (T), comprenant :

un tambour stationnaire (11) ayant un diamètre inférieur à un diamètre standardisé de tambour ;
un tambour rotatif (12) disposé coaxialement avec ledit tambour stationnaire (11) et effectuant une rotation à une vitesse staridardisée, ledit tambour rotatif (12) ayant un diamètre inférieur audit diamètre standardisé de tambour ;

des têtes magnétiques (13) installées sur ledit tambour rotatif (12) pour former une première et une seconde pistes inclinées (TP1, TP2) sur la bande magnétique (T) se déplaçant à une première vitesse et une seconde vitesse plus lente que la première vitesse, respectivement, pour enregistrer les signaux numériques sur la bande magnétique (T) et/ou pour reproduire les signaux numériques enregistrés sur une première (TP1) et une seconde (TP2) pistes inclinées formées sur la bande magnétique (T) se déplaçant à la première et la seconde vitesses, respectivement, la première piste inclinée (TP1) étant orientée à un premier angle de piste standardisé ($\alpha$), la seconde piste inclinée étant orientée à un second angle de piste standardisé ($\beta$), et

un pas (11b) formé sur une surface périphérique externe dudit tambour stationnaire (11) à un angle de pas donné ($\theta$) pour obtenir un enroulement en spirale de la bande magnétique (T) autour dudit tambour stationnaire (11) et dudit tambour rotatif, ledit angle de pas ($\theta$) étant réglé à une valeur moyenne entre un premier et un second angles de pas, le premier angle de pas permettant à la première piste inclinée d'être formée au premier angle de piste standardisé ($\alpha$) durant le déplacement de la bande magnétique à la première vitesse, le second angle de pas permettant à la seconde piste inclinée d'être formée au second angle de piste standardisé ($\beta$) durant le déplacement de la bande magnétique (T) à la seconde vitesse.

2. Appareil à têtes rotatives selon la revendication 1, dans lequel ledit angle de pas ($\theta$) est déterminé en corrigeant la valeur moyenne entre le premier et le second angles de pas, en utilisant un rapport entre largeurs (W1, W2) de la première piste inclinée (TP1) et de la seconde piste inclinée standardisée (TP2).

## FIG. 1

LEAD ANGLE $\theta = (\theta 1 + \theta 2)/2 = 9.1450°$

|  | STANDARD | DRUM DIAMETER $= \Phi 16mm$ | TRACK ANGLE DIFFERENCE | LINEARITY |
|---|---|---|---|---|
| SP MODE | 9.1668° | 9.1678° | 0.001° | 0.56 $\mu$m |
| LP MODE | 9.1612° | 9.1602° | −0.001° | −0.56 $\mu$m |

## FIG. 2

LEAD ANGLE $\theta = \theta 1 + 2/3 \times (\theta 2 - \theta 1) = 9.145330°$

|  | STANDARD | DRUM DIAMETER $= \Phi 16mm$ | TRACK ANGLE DIFFERENCE | LINEARITY |
|---|---|---|---|---|
| SP MODE | 9.1668° | 9.1681° | 0.0013° | 0.73 $\mu$m |
| LP MODE | 9.1612° | 9.1605° | −0.0007° | −0.39 $\mu$m |

# FIG. 3(a)

10A(10B,10C)

13L
13R
18
14
15
16
T
17

# FIG. 3(b)

12

T
12a
13
13
11a
11b
θ
11

# FIG. 4(a)

SP MODE

# FIG. 4(b)

LP MODE

## FIG. 5
### PRIOR ART

# FIG. 6
# PRIOR ART

HEAD MORTION

1 TRACK=356 SYNC BLOCKS

52 54 56

30SB

51 53 55

57

58 59

DATA REGION (306 SYNC BLOCKS)

# FIG. 7
# PRIOR ART

LEAD ANGLE $\theta$ 1=9.1440°

|  | STANDARD | DRUM DIAMETER = Φ16mm | TRACK ANGLE DIFFERENCE | LINEARITY |
|---|---|---|---|---|
| SP MODE | 9.1668° | 9.1668° | 0 | 0 $\mu$m |
| LP MODE | 9.1612° | 9.1592° | −0.002° | −1.1 $\mu$m |

# FIG. 8
# PRIOR ART

L

T

STANDARDIZED TRACK ANGLE